# EUROPÄISCHE PATENTSCHRIFT

(11) **EP 0 468 286 B1**
(45) Veröffentlichungstag und Bekanntmachung des Hinweises auf die Patenterteilung: **29.03.1995**
(21) Anmeldenummer: 91111525.1
(22) Anmeldetag: 10.07.1991
(51) Int. Cl.: G01L 7/04, G01K 5/36, G01L 27/00, G01K 15/00

(54) **Verfahren und Vorrichtung zur Herstellung eines Messgerätes für die Messgrösse Druck oder Temperatur**
Method and apparatus for producing a pressure or temperature measuring device
Procédé et dispositif pour produire un dispositif de mesure de pression ou température

(30) Priorität: 26.07.1990 DE 4023760
(43) Veröffentlichungstag der Anmeldung: 29.01.1992
(73) Patentinhaber: Alexander Wiegand GmbH & Co. Armaturen- und Manometerfabrik, D-63911 Klingenberg (DE)
(72) Erfinder: Julien, Hermann, W-8763 Klingenberg (DE); Gross, Klaus, W-8751 Stockstadt (DE)
(74) Vertreter: Grams, Klaus Dieter, Dipl.-Ing.

(56) Entgegenhaltungen:
- DD-A- 255 989
- DE-C- 2 654 279
- US-A- 4 240 298

## Beschreibung

Die Erfindung bezieht sich auf ein Verfahren zur Herstellung eines Meßgerätes für die Meßgröße Druck oder Temperatur gemäß dem Oberbegriff von Patentanspruch 1. Ferner bezieht sich die Erfindung auf eine Vorrichtung gemäß dem Oberbegriff von Patentanspruch 4 zur Durchführung des erfindungsgemäßen Verfahrens.

Im folgenden wird die Erfindung anhand der Herstellung eines Rohrfedermanometers erläutert. Die Erfindung ist jedoch nicht auf die Herstellung eines Rohrfedermanometers beschränkt, sondern grundsätzlich anwendbar bei der Herstellung eines Meßgerätes für die Meßgröße Druck oder Temperatur, bei dem die Anzeige des aktuellen Meßwertes durch die Stellung eines Zeigers und die Ablesung des Meßwertes durch Vergleich der Zeigerstellung mit der aus Markierungen bestehenden Skala auf einem Zifferblatt erfolgt.

Ein Verfahren zur Herstellung eines Rohrfedermanometers ist, beispielsweise durch die DE-C2-26 54 279 bekannt. Bei diesem bekannten Vorgehen kommt ein Zifferblatt zur Anwendung, bei dem sich die ringförmige Skala über einen Winkelbereich von 270° erstreckt. Der Anfang der Skala ist beispielsweise dem Nulldruck zugeordnet, und das Ende der Skala ist dem Nenndruck zugeordnet. Dieser vom Zeiger bis zum Nenndruck zu überstreichende Weg wird als Spanne bezeichnet. Durch die Markierungen ist die Spanne äquidistant unterteilt, um eine Ablesung von Meßwerten zwischen Nulldruck und Nenndruck zu ermöglichen. Bei dem einzelnen Meßgerät kommt es aufgrund von Fertigungstoleranzen sowie der Geometrie des als Rohrfeder ausgebildeten Meßgliedes sowie des an das Meßglied angekoppelten Zeigerwerkes dazu, daß die Zeigerstellung nicht genau proportional dem angelegten Druck folgt und daß der Zeiger bis zum Nenndruck nicht genau die Spanne von 270° überstreicht, sondern einen etwas kürzeren oder etwas längeren Weg zurücklegt. Die dadurch bedingten Fehler der Anzeige werden als Spannefehler und Linearitätsfehler bezeichnet. Diese klein zu halten ist Aufgabe des Justierens. Es ist bekannt, das Justieren manuell durchzuführen, wobei insbesondere auf die das freie Ende der Rohrfeder mit dem übrigen Zeigerwerk verbindende Zugstange und deren Gelenke eingewirkt wird. Dieses manuelle Justieren ist handwerklich aufwendig und erfordert verhältnismäßig viel Zeit. Ferner ist es durch die bereits genannte DE-C2-26 54 279 bekannt, das Justieren in der Weise durchzuführen, daß erst nach der Messung der Auslenkungen des freien Endes der Rohrfeder zumindest eines der Gelenke der Zugstange mechanisch ausgebildet werden. Dieses Vorgehen ermöglicht eine Justierung ohne großen zeitlichen Aufwand und ohne erhöhte Anforderungen an handwerkliches Geschick.

Schwierig bleibt jedoch die Verringerung des Linearitätsfehlers. Wenn dieser auch nur an einer vorgegebenen Stelle der Skala zu Null gemacht werden soll, so erfordert dies während des Kalibrierens und Justierens die Ermittlung eines Wertepaares aus Meßgröße und Auslenkung für diese Stelle der Skala und entsprechende Einwirkungen auf die Geometrie des Zeigerwerks. Schon dies kann jedoch wegen der gegenseitigen Abhängigkeit von Linearitätsfehler und Spannefehler im Einzelfall unmöglich sein. Noch höhere Anforderungen an die Linearität, d.h. an die genaue Anzeige von Zwischenwerten auf der äquidistant geteilten Skala, sind bei herkömmlichem Vorgehen praktisch nicht zu realisieren.

Ein Verfahren mit den Merkmalen des Oberbegriffs von Patentanspruch 1 sowie eine Vorrichtung mit den Merkmalen des Oberbegriffs von Patentanspruch 4 sind im Zusammenhang mit einem Manometer bekannt durch das Dokument DD-A1-255989. Gemäß diesem bekannten Verfahren erfolgt die Beschriftung des Zifferblattes mit den Markierungen der Skala erst, nachdem für das einzelne Meßgerät zum Zweck des Kalibrierens zumindest drei Wertepaare aus Meßgröße und Auslenkung ermittelt worden sind, so daß die Skala den tatsächlichen Auslenkungen bei den zumindest drei verschiedenen Werten der Meßgröße, die den gemessenen Auslenkungen zugeordnet sind, genau angepaßt werden kann. Dabei erfolgt das Schreiben der Skala aufgrund der Vorschrift mittels bekannter Verfahren, während das Meßsystem des Manometers einschließlich des Zifferblattes und des Zeigers in einer Meßeinrichtung zur Messung der Auslenkungen des Zeigers bei verschiedenen Werten der Meßgröße eingespannt ist.

Der Erfindung liegt die Aufgabe zugrunde, das gattungsgemäße Verfahren dahingehend zu verbessern, daß der Spannefehler und der Linearitätsfehler des einzelnen Meßgerätes mit geringem Aufwand möglichst niedrig gehalten werden können. Ferner liegt der Erfindung die Aufgabe zugrunde, eine entsprechende Vorrichtung zu schaffen.

Diese Aufgabe wird hinsichtlich des Verfahrens durch das Verfahren gemäß Patentanspruch 1 gelöst. Auch bei dem erfindungsgemäßen Verfahren ist vorgesehen, daß das Zifferblatt mit der Skala erst beschriftet wird, nachdem für das einzelne Meßgerät zum Zweck des Kalibrierens zumindest drei Wertepaare aus Meßgröße und Auslenkung ermittelt worden sind, so daß die Skala den tatsächlichen Auslenkungen bei den zumindest drei verschiedenen Werten der Meßgröße, die den gemessenen Auslenkungen zugeordnet sind, diesen genau angepaßt werden kann und angepaßt wird. Ein wesentliches Merkmal der Erfindung ist, daß danach die Beschriftung des Zifferblattes mittels eines Laserbeschriftungsgerätes erfolgt. Dies ermöglicht ein Beschriften bzw. Drucken des Zifferblattes ohne vorherige Klischeeherstellung in kurzer Zeit und unter automatischer Steuerung durch die Vorschrift über die bestimmte Anordnung der Markierungen, die aus den gemessenen Auslenkungen bestimmt worden ist.

Ein weiteres wesentliches Merkmal der Erfindung ist, daß das gesamte Meßgerät einschl. des Zifferblattes, des Zeigers, des Gehäuses und der Sichtscheibe fertig montiert wird, wobei jedoch zunächst auf dem Zifferblatt noch die Skala und ggf. gleichzeitig mit dieser zu schreibende Angaben fehlen. Die Beschriftung wird dann erst durch die Sichtscheibe hindurch nach ansonsten vollständiger Fertigmontage des Meßgerätes durchgeführt.

Die Auslenkungen werden vorzugsweise bei den Werten 0 %, 50 % und 100 % des Nennwertes der Meßgröße für das bestimmte Meßgerät gemessen. Für die Kleinhaltung des Linearitätsfehlers werden die zwischen 0 % und 100 % des Nennwertes gemessenen Auslenkungen herangezogen. Je mehr Wertepaare in diesem Bereich berücksichtigt werden, desto stärker kann der Linearitätsfehler der Anzeige verringert werden.

Wie sich aus dem vorstehenden ergibt, wird bei dem erfindungsgemäßen Verfahren die Skala der tatsächlichen Zeigerbewegung angepaßt und dadurch eine hohe Anzeigegenauigkeit erzielt, statt daß ausschließlich die Zeigerbewegung einer vorgegebenen Skala möglichst weitgehend angepaßt wird. Dies vermindert die Anforderungen und den Aufwand während des Justierens und stellt einen wesentlichen weiteren Vorteil der Erfindung dar. Die Erfindung schließt nicht aus, daß außer dem in erfindungsgemäßer Weise durchgeführten Beschriften des Zifferblattes eine Justierung erfolgt. Insbesondere bleibt es zweckmäßig, den Spannfehler weitgehend mechanisch zu justieren, so daß durch das erfindungsgemäße Beschriften im wesentlichen der Linearitätsfehler verringert wird. Die Beschriftung des Zifferblattes mit der null Prozent der Meßgröße entsprechenden Markierung kann erfolgen, bevor das Zifferblatt mit dem Zeiger werk verbunden wird.

Ein weiterer Vorteil des erfindungsgemäßen Verfahrens gemäß Patentanspruch 3 liegt schließlich darin, daß der Herstellungs- und Lagerhaltungsaufwand für Zifferblätter verringert ist. Zifferblätter sind üblicherweise außer mit den Markierungen der Skala und den zugeordneten Maßzahlen und der Maßeinheit auch beschriftet mit Angaben zur Meßgröβe, zur Klasse, zum Hersteller, zu einer gegebenenfalls eingehaltenen Norm und dergleichen. Aufgrund der Kombinationsmöglichkeiten dieser Angaben ergibt sich eine sehr große Anzahl verschiedener benötigter Zifferblätter, die bei herkömmlichem Vorgehen gedruckt und auf Lager gehalten werden müssen. Dadurch, daß beim erfindungsgemäßen Vorgehen zumindest ein Teil dieser Angaben erst unmittelbar im Zusammenhang mit dem Kalibrieren auf das Zifferblatt geschrieben wird, verringert sich die Anzahl der vorbereitend herzustellenden und auf Lager zu haltenden Zifferblätter. Das erfindungsgemäße Vorgehen ermöglicht es, außer den Markierungen der Skala mittels des Laserbeschriftungsgerätes zugleich zumindest einen Teil der übrigen vorstehend genannten Angaben auf das Zifferblatt zu schreiben. Dabei wird vorzugsweise sogar derart vorgegangen, daß alle in gleicher Farbe wie die Markierungen zu schreibenden Angaben zugleich mit den Markierungen auf das Zifferblatt geschrieben werden und dieses lediglich zuvor mit ggf. gewünschten, andersfarbigen Angaben bedruckt zu werden braucht.

Hinsichtlich der Vorrichtung wird die der Erfindung zugrundeliegende Aufgabe durch die Vorrichtung gemäß Anspruch 4 gelöst.

Ein Ausführungsbeispiel der Erfindung ist in den Zeichnungen dargestellt und wird im folgenden näher erläutert. Es zeigen:
Fig. 1 eine Vorderansicht eines herkömmlichen Zifferblattes eines Rohrfedermanometers mit einem zugeordneten Zeiger;
Fig. 2 eine schematische Vorderansicht von Teilen einer Vorrichtung zur Herstellung eines Rohrfedermanometers;
Fig. 3 eine Draufsicht auf eine Meßeinrichtung der Vorrichtung gemäß Fig. 2 sowie ein in die Meßeinrichtung eingesetztes Rohrfedermanometers mit einem noch unbeschrifteten Zifferblatt; und
Fig. 4 eine Fig. 3 ähnliche Darstellung, die den inneren Aufbau des Rohrfedermanometers erkennen läßt.

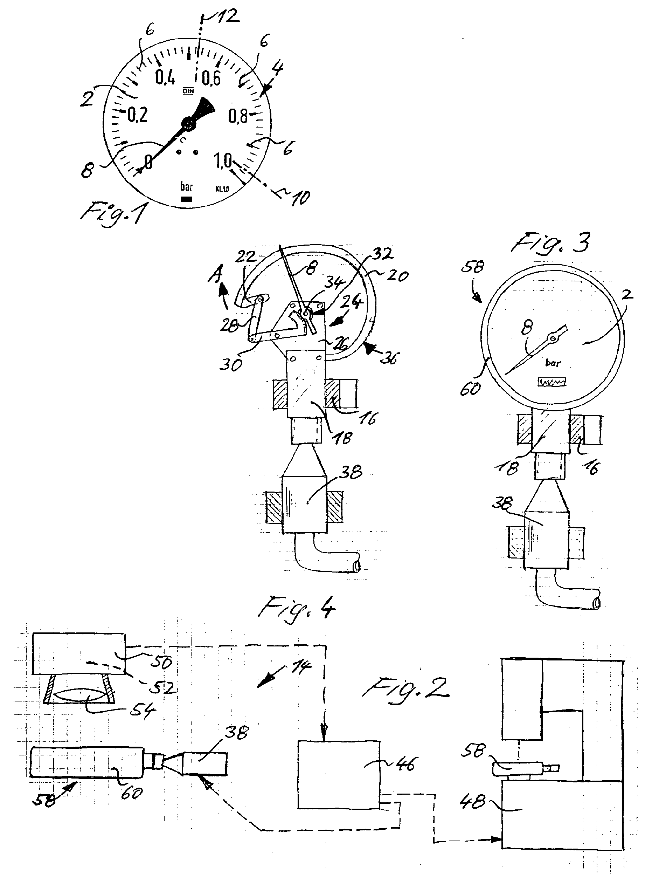

Fig. 1 zeigt ein Zifferblatt 2 für ein Meßgerät in Form eines Rohrfedermanometers. Das Zifferblatt 2 ist mit einer ringförmigen Skala 4 beschriftet, die sich entlang dem Rand des kreisförmigen Zifferblattes 2 über einen Winkel von 270° erstreckt. Die Skala 4 umfaßt Markierungen 6 in Form von Skalenstrichen sowie einige den Markierungen zugeordnete Maßzahlen. Die Markierung mit der Maßzahl "0" ist dem Nulldruck zugeordnet und die Markierung mit der Maßzahl "1,0" ist dem Nenndruck 1 bar zugeordnet. Ferner weist das Zifferblatt weitere Beschriftungen auf, nämlich die Klassenangabe "Kl.1,0", den Normenhinweis DIN, die Angabe der Maßeinheit "bar" sowie darunter eine Herstellerangabe. Vor dem Zifferblatt 2 ist ein Zeiger 8 angeordnet. Durch Vergleich der Zeigerstellung mit den Markierungen 6 der Skala 4 erfolgt die Ablesung des gemessenen und angezeigten Meßwertes.

Das in Fig. 1 gezeigte Zifferblatt ist auf herkömmliche Weise hergestellt, d.h. mittels eines Klischees gedruckt worden. Die Skala erstreckt sich über genau 270°. Sie ist linear ausgebildet, d.h. die Markierungen 6 sind äquidistant angeordnet. Dem liegt die Annahme zugrunde, daß sich der Zeiger 8 zwischen Nulldruck und Nenndruck um genau 270° bewegt und daß seine Bewegung bzw. Zeigerstellung genau proportional dem gemessenen Druck folgt. Diese Annahme ist jedoch in der Realität für das einzelne Meßgerät nicht erfüllt. Vielmehr nimmt beispielsweise bei einem einzelnen Gerät der Zeiger 8 bei Beaufschlagung des Rohrfedermanometers mit Nenndruck die strichpunktiert dargestellt Stellung 10 ein und bei halbem Nenndruck die strichdoppelpunktierte Stellung 12 ein. Die Differenz zwischen der Stellung 10 und der dem Nenndruck zugeordneten Markierung ist der Spannefehler. Die Differenz zwischen der Stellung 12 und der dem halben Nenndruck zugeordneten Markierung ist Auswirkung des Linearitätsfehlers. Als Linearitätsfehler im weiteren Sinne wird auch eine Abweichung zwischen der tatsächlichen Zeigerstellung und der dem dabei herrschenden Druck zugeordneten Markierung verstanden, wenn die Skala nicht äquidistant unterteilt ist, sondern aufgrund einer anderen Annahme bezüglich des Zeigerwerkes auf andere Weise systematisch unterteilt ist.

Im folgenden wird anhand der Figuren 2 bis 4 ein Beispiel für ein Verfahren zur Herstellung eines Rohrfedermanometers beschrieben, bei dem das Zifferblatt mittels eines Laserbeschriftungsgerätes unter Berücksichtigung der tatsächlich vom Zeiger bzw. von mit diesem gekoppelten Elementen des Rohrfedermanometers eingenommenen Stellungen bei zum Zweck der Kalibrierung angelegten Drücken. Das bei diesem Vorgehen hergestellte Zifferblatt ähnelt im Aussehen dem in Fig. 1 gezeigten Zifferblatt. Im Vergleich zu diesem sind jedoch die Markierungen der Skala in Umfangsrichtung des Zifferblattes 2 so verlagert, daß die Anzeigefehler zumindest bei den Kalibrierdrücken zu Null gemacht sind. Die Markierung für den Nenndruck befindet sich dann am Ort der Zeigerstellung 10, und die Markierung für den halben Nenndruck befindet sich dann am Ort der Zeigerstellung 12, wobei die übrigen Markierungen ebenfalls im Vergleich zum herkömmlichen Zifferblatt gemäß Fig. 1 verlagert sind, d.h. im Bereich zwischen halbem Nenndruck und Nenndruck dichter als dargestellt beieinander liegen und im Bereich zwischen Nulldruck und halbem Nenndruck weiter als dargestellt auseinander liegen. Allerdings muß nicht die Markierung für den Nenndruck im Vergleich zum dargestellten Zifferblatt verlagert sein. Vielmehr kann diese an gleichem Ort verbleiben, nämlich dann, wenn der Spannefehler durch mechanisches Justieren durch eine der herkömmlichen Justiermaßnahmen beseitigt worden ist. Im Vergleich zum dargestellten Zifferblatt unterschiedliche Orte weisen dann lediglich die Markierungen für die Drücke zwischen Nulldruck und Nenndruck auf.

Die genannte Vorrichtung umfaßt eine Meßeinrichtung 14 mit einem in den Fig. 3 und 4 angedeuteten Spannfutter 16. Während der zum Zweck des Kalibrierens durchgeführten Messungen ist ein Federträger 18 eines Rohrfedermanometer 58 in das Spannfutter 16 eingespannt. Am Federträger 18 befestigt ist (siehe Fig. 4) eine im wesentlichen kreisförmige Rohrfeder 20, an deren freiem Ende ein Endstück 22 befestigt ist. Ferner befestigt am Rohrträger 11 ist ein Zeigerwerk 24, von dem in Fig. 4 eine hintere Platine 26, eine Zugstange 28, ein Segmenthebel 30, ein Zeigerritzel 32 sowie eine Zeigerwelle 34 erkennbar sind. Die Rohrfeder 20 und das Zeigerwerk 24 sind bereits während hier nicht näher erläuterter Herstellungsschritte zu einer Einheit 36 verbunden worden. Mit Hilfe von zwei Gelenken ist die Zugstange 28 sowohl gelenkig mit dem Endstück 22 als auch mit einem Ende des schwenkbar an der Platine 26 gelagerten Segmenthebels 30 verbunden, so daß die unter Druckbeaufschlagung der Rohrfeder 20 erfolgende Auslenkung von deren Ende bzw. Endstück 22 in Richtung eines Pfeiles A in eine Schwenkbewegung des Segmenthebels 30 umgewandelt wird. Ein Zahnsegment des Segmenthebels 30 kämmt mit dem zusammen mit der Zeigerwelle 34 drehbar gelagerten Zeigerritzel 32, so daß die Schwenkbewegung des Segmenthebels 30 in eine Drehung der Zeigerwelle 34 umgewandelt wird. Am fertigen Rohrfedermanometer wird diese Drehung unmittelbar auf einen dann auf die Zeigerwelle 34 gesetzten Zeiger 8 übertragen.

Zusätzlich zu dem Spannfutter 16 umfaßt die Meßeinrichtung 14 einen Druckmittelanschluß 38 sowie eine optoelektrische Meßvorrichtung 50 (siehe Fig. 2).

Der Druckmittelanschluß 38 besteht im wesentlichen aus einer konisch zulaufenden Düse, die in druckdichte Verbindung mit einer nicht dargestellten Anschlußöffnung des Rohrfedermanometers gebracht werden kann, die im Federträger 18 ausgebildet ist. Der Druckmittelanschluß 38 ist in Richtung der Längsachse der Düse verschiebbar, so daß er in Richtung zum in das Spannfutter 16 gespannten Federträger 18 und in dazu entgegengesetzter Richtung gefahren werden kann. Der Druckmittelanschluß 38 ist seinerseits an eine Druckquelle angeschlossen, aus der der Druckmittelanschluß 38 und damit die Rohrfeder 20 zum Zweck des Kalibrierens mit Drücken verschiedener Werte gespeist werden kann.

Die optoelektronische Meßvorrichtung 50 ist mit einem nicht dargestellten CCD-Halbleiterbildaufnehmer 52 ausgestattet. Die Meßvorrichtung 50 ist derart oberhalb des in das Spannfutter 16 eingespannten Rohrfedermanometers 58 angeordnet, daß sich der Zeiger 8 im Gesichtsfeld eines Objektivs 54 der Meßvorrichtung 50 befindet, so daß das Objektiv 54 auf dem CCD-Halbleiterbildaufnehmer ein Bild des betrachteten Rohrfedermanometers 58 einschließlich des Zeigers 8 erzeugt. Eine optoelektronische Meßvorrichtung 50 mit den hier beschriebenen und erforderlichen Eigenschaften ist an sich bekannt und wird daher hier nicht im einzelnen erläutert. Die Meßvorrichtung 50 liefert eine digitalisierte Bildinformation, aus der ein Rechner 46 die Auslenkung des Zeigers 8 bei den verschiedenen Kalibrierdrücken berechnet. Dadurch liegen Wertepaare aus Auslenkung und Kalibrierdruck vor, die der Rechner 46 zu einer Vorschrift zur Anordnung der Markierungen innerhalb der Skala des Zifferblattes 2 verarbeitet.

Die Meßeinrichtung wird gesteuert mittels des Rechners 46. Dieser Rechner 46 steuert die Beaufschlagung der Rohrfeder 20 mit den gewünschten Kalibrierdrücken, beispielsweise dem Nulldruck, dem Nenndruck, einem Druck von 40 % des Nenndrucks und einem Druck von 70 % des Nenndrucks.

Die Beschriftung selber erfolgt mittels eines lediglich schematisch in Seitenansicht dargestellten Laserbeschriftungsgerätes 48. Ein solches Laserbeschriftungsgerät ist an sich bekannt und wird daher hier nicht näher erläutert.

Besonderheit des beschriebenen Ausführungsbeispiels ist, daß das gesamte Rohrfedermanometer 58 einschl. seines Gehäuses 60 und seiner nicht dargestellten Sichtscheibe fertig montiert worden ist, bevor es in der Meßeinrichtung 14 mit den Kalibrierdrücken beaufschlagt wird. Zu diesem Zeitpunkt fehlt lediglich noch die mittels des Laserbeschriftungsgerätes 48 auf das Zifferblatt 2 aufzubringende Beschriftung, also insbeondere die Skala 4, wie dies in Fig. 3 zu erkennen ist. Mittels der optoelektronischen Meßvorrichtung 50 werden die Auslenkungen des Zeigers 8 gemessen und vom Rechner 46 zusammen mit dem zugeordneten Druckwert zur Vorschrift für die Beschriftung des Zifferblattes 2 verarbeitet. Im Laserbeschriftungsgerät 48 wird dann das Zifferblatt 2 des ansonsten kompletten Rohrfedermanometers 58 durch dessen Sichtscheibe hindurch beschriftet, also insbesondere mit der Skala 4 versehen. Gegebenenfalls werden dabei weitere Angaben auf das Zifferblatt geschrieben. Eine der Möglichkeiten, eine Behinderung des Beschriftens durch den Zeiger zu vermeiden, besteht in diesem Falle darin, die Markierung für den Nulldruck bereits auf das Zifferblatt zu drucken, bevor das Zifferblatt mit dem Zeigerwerk 24 verbunden wird.

Ergebnis ist ein Rohrfedermanometer mit einer der Einheit aus Rohrfeder 20 und Zeigerwerk 24 individuell angepaßten Skala 4. Die Anzeigegenauigkeit dieses Rohrfedermanometers kann auch im Hinblick auf Linearitätsfehler sehr groß gemacht werden, ohne daß hierzu der Aufwand für die Justage erhöht zu werden braucht. Höhere Anforderungen an die Anzeigegenauigkeit können durch Erfassung und Auswertung einer entsprechend größeren Anzahl von Wertepaaren aus Auslenkung und Druck erfüllt werden.

Üblicherweise geht dem beschriebenen Einmessen mittels der Meßeinrichtung 14 eine Justage voraus. Notwendig ist eine vorherige Justage jedoch nicht, wenn Spanne- und Linearitätsfehler in solchen Bereichen liegen, daß allein durch die beschriebene Anpassung des Zifferblattes bzw. der Markierungen seiner Skala die gewünschte Anzeigegenauigkeit erreicht werden kann.

Der Rechner 46 des beschriebenen Ausführungsbeispiels braucht bei der Durchführung des beschriebenen Verfahrens nicht unbedingt zur Anwendung zu kommen. Vielmehr kann die Vorschrift für die Beschriftung des Zifferblattes 2 auch auf andere Weise als mittels eines Rechners aus den Wertepaaren aus Auslenkung und Druck gewonnen werden. Es versteht sich jedoch, daß der Einsatz eines Rechners zu diesem Zweck und zugleich zur Steuerung der Meßeinrichtung 14 sowie des Laserbeschriftungsgerätes 48 besonders zweckmäßig ist.

Das vorstehend erläuterte Ausführungsbeispiel behandelt die Herstellung eines Rohrfedermanometers. In Anbetracht der Erläuterungen dürfte es sich jedoch verstehen, daß es auf die Ausbildung des Meßgliedes des Meßgerätes als Rohrfeder nicht ankommt und daß die Erfindung auch anwendbar ist auf Druckmeßgeräte bzw. Manometer, deren Meßglied als Plattenfeder, Wellrohr, Kapselfeder, Schraubenfeder oder dergl. ausgebildet ist. Ferner ist erkennbar, daß die Erfindung nicht beschränkt ist auf die Herstellung von Druckmeßgeräten, sondern auch bei der Herstellung von Temperaturmeßgeräten anwendbar ist, beispielsweise bei Bimetallthermometern, Federthermometern oder Gasdruckthermometern. In diesen Fällen erfolgt dann in der Meßeinrichtung 14 die Messung der Auslenkungen unter Beaufschlagung des Meßgliedes bzw. bei Gasthermometern des Sensors mit verschiedenen Kalibriertemperaturen statt der Kalibrierdrücke bei den vorstehend beschriebenen Ausführungsbeispielen.

## Patentansprüche

1. Verfahren zur Herstellung eines Meßgerätes (58) für die Meßgröße Druck oder Temperatur, das ein Meßglied (20), das in Abhängigkeit von Änderungen der Meßgröße seine Form ändert, ein Zeigerwerk (24), das die Formänderung des Meßgliedes in eine Drehung einer Zeigerwelle (34) umwandelt, einen auf der Zeigerwelle sitzenden Zeiger (8), ein Zifferblatt (2), das mit einer Skala (4) aus Markierungen (6) versehen ist, und ein mit einer durchsichtigen Sichtscheibe versehenes Gehäuse (60) aufweist, in dem das Zifferblatt (2), der Zeiger (8), das Meßglied (20) und das Zeigerwerk (24) derart angeordnet sind, daß durch die Sichtscheibe hindurch das Zifferblatt (2) und der Zeiger (8) sichtbar sind,
wobei das Verfahren die Schritte aufweist,
daß das Meßglied (20) und das Zeigerwerk (24) miteinander zu einer Einheit (36) verbunden werden,
daß danach das noch nicht mit der Skala (4) beschriftete Zifferblatt (2) an der Einheit angebracht wird sowie der Zeiger (8) auf die Zeigerweile (34) gesetzt wird,
daß zum Zweck des Kalibrierens des einzelnen Meßgerätes bei zumindest drei verschiedenen Werten der Meßgröße die mit der jeweiligen Formänderung des Meßgliedes (20) des einzelnen Meßgerätes gekoppelten Auslenkungen des Zeigers (8) gemessen werden, bevor das zugeordnete Zifferblatt (2) mit seiner Skala (4) versehen wird,
daß aufgrund der gemessenen Wertepaare aus Meßgröße und Auslenkung des Zeigers (8) die Anordnung zumindest derjenigen Markierungen (6) innerhalb der Skala (4) bestimmt wird, denen Werte größer als null Prozent der Meßgröße zugeordnet sind, und
daß mittels eines Beschriftungsgerätes (48) die Skala (4) mit der bestimmten Anordnung der Markierungen (6) auf das Zifferblatt (2) geschrieben wird,
**dadurch gekennzeichnet**,
daß zunächst das Meßglied (20), das Zeigerwerk (24), das noch nicht mit der Skala (4) beschriftete Zifferblatt (2) und der Zeiger (8) innerhalb des vorderseitig mittels der Sichtscheibe geschlossenen Gehäuses (60) montiert werden, daß danach die Messung der Auslenkungen des Zeigers (8) sowie die Bestimmung der Markierungen (6) innerhalb der Skala (4) erfolgt und
daß das Beschriftungsgerät ein Laserbeschriftungsgerät (48) ist, mittels dessen die Beschriftung durch die Sichtscheibe hindurch erfolgt.

2. Verfahren nach Anspruch 1, **dadurch gekennzeichnet**, daß die Beschriftung des Zifferblattes (2) mit der null Prozent der Meßgröße entsprechenden Markierung erfolgt, bevor das Zifferblatt (2) mit dem Zeigerwerk (24) verbunden wird.

3. Verfahren nach Anspruch 1 oder 2, **dadurch gekenn****zeichnet**, daß mittels des Laserbeschriftungsgerätes (48) zugleich mit den Markierungen (6) gleichfarbige Angaben zu den Maßzahlen und/oder zur Maßeinheit und/oder zur Meßgröße und/oder zur Klasse und/oder zum Hersteller geschrieben werden.

4. Vorrichtung zur Durchführung des Verfahrens nach einem der Ansprüche 1 bis 3,. mit einer Meßeinrichtung (14), zur Messung der Auslenkungen des Zeigers (8) bei verschiedenen Werten der Meßgröße, einem Rechner (46), dem als Eingangssignal die gemessenen Wertepaare zugeführt werden für ihre Zuordnung zu einer Vorschrift zur Anordnung der Markierungen (6) innerhalb der Skala (4), und einem Beschriftungsgerät (48) zum Schreiben der Skala aufgrund dieser Vorschrift auf das jeweilige Zifferblatt (2), wobei die Meßeinrichtung (14) eine optoelektronische Meßvorrichtung (50) aufweist, mittels der berührungslos die Auslenkungen des Zeigers (8) erfaßt werden, **dadurch** **gekennzeichnet,** daß das Beschriftungsgerät ein Laserbeschriftungsgerät (48) ist und daß die optoelektronische Meßvorrichtung (50) einen CCD-Halbleiterbildaufnehmer (52) aufweist, der in Betrieb digitale Bildinformationen liefert.

## Claims

1. A method for producing a device (58) for measuring the measured variable of pressure or temperature, which has a measuring element (20) that changes its shape as a function of changes in the measured variable, a pointer train (24) which converts the changes in shape of the measuring element into a rotation of a pointer shaft (34), a pointer (8) disposed on the pointer shaft, a dial (2) which is provided with a scale (4) of markings (6), and a casing (60) provided with a clear viewing glass, wherein the dial (2), the pointer (8), the measuring element (20) and the pointer train (24) are arranged in such a way that the dial (2) and the pointer (8) are visible through the viewing glass,
wherein the method includes the steps,
that the measuring element (20) and the pointer train (24) are joined together into a unit (36),
that subsequently the dial (2), not yet inscribed with the scale (4), is attached to the unit and the pointer (8) is disposed on the pointer shaft (34),
that for the purpose of calibrating the individual measurement device with at least three different values of the measured variable, the deflections of the pointer (8) coupled with the respective change in shape of the measuring element (20) of the individual measurement device are measured before the associated dial (2) is provided with its scale (4),
that on the basis of the measured pairs of values of the measured variable and the deflection of the pointer (8), the layout of at least those markings (6) is determined within the scale (4) to which values are assigned that are higher than zero percent of the measured variable, and
that the scale (4) with the specified layout of the markings (6) is inscribed on the dial (2) by means of an inscribing device (48),
**characterized in that**
at first the measuring element (20), the pointer train (24), the dial (2), not yet inscribed with the scale (4), and the pointer (8) are mounted within the casing (60) that is closed at its front side by means of the viewing glass,
that subsequently the measurement of the deflections of the pointer (8) is effected, as well as the determination of the markings (6) within the scale (4) and
that the inscribing device is a laser inscribing device (48), by means of which the inscription is effected through the viewing glass.

2. A method according to claim 1, **characterized in that** the inscription of the dial (2) with the marking corresponding to zero percent of the measured variable is effected before the dial (2) is connected to the pointer train (24).

3. A method according to claim 1 or 2, **characterized in that** indications relating to the measured digits and/or to the unit of measurement and/or to the measured variable and/or to the category and/or to the manufacturer are inscribed in the same colour simultaneously with the markings (6) by means of the laser inscribing device.

4. An apparatus for operating the method according to one of claims 1 to 3, with a measurement device (14) for measuring the deflections of the pointer (8) with different values of the measured variable, a computer (46) to which the measured pairs of values are fed as the input signal for their assignment to an instruction for arranging the markings (6) within the scale (4), and an inscribing device (48) for inscribing the scale on the basis of this instruction onto the respective dial (2), in which arrangement the measuring apparatus has an optoelectronic measuring device (50), by means of which the deflections of the pointer (8) are registered without contact, **characterized in** **that** the inscribing device is a laser inscribing device (48), and that the optoelectronic measurement device (50) has a CCD-semiconductor pick-up which in operation provides digital picture data.

## Revendications

1. Procédé pour produire un appareil de mesure (58) pour la pression ou la température en tant que valeur de mesure, qui présente un organe de mesure (20) qui modifie sa forme en dépendance des modifications de la valeur de mesure, un dispositif indicateur (24) qui transforme la modification de forme de l'organe de mesure en une rotation d'un arbre d'aiguille (34), une aiguille (8) reposant sur l'arbre d'aiguille, un cadran (2) qui est pourvu d'une échelle (4) de marques (6), et un boîtier (60) pourvu d'une vitre de contrôle transparente, le cadran (2), l'aiguille (8), l'organe de mesure (20) et le dispositif indicateur (24) étant agencés de telle sorte que le cadran (2) et l'aiguille (8) sont visibles à travers la vitre de contrôle,
le procédé comprenant les étapes suivantes :
- l'organe de mesure (20) et le dispositif indicateur (24) sont reliés l'un à l'autre pour former une unité (36),
- ensuite, le cadran qui n'est pas encore marqué avec l'échelle (4) est fixé dans l'unité, et l'aiguille (8) est posée sur l'arbre d'aiguille (34),
- pour le calibrage de l'appareil de mesure individuel, on mesure pour au moins trois valeurs différentes de la valeur de mesure les déflexions de l'aiguille (8) accouplées à la modification de forme respective de l'organe de mesure (20) de l'appareil de mesure individuel, avant de pourvoir le cadran respectif (2) de son échelle (4),
- sur la base des paires de valeurs mesurées de la valeur de mesure et de la déflexion de l'aiguille (8), on détermine l'agencement du moins des marques (6) à l'intérieur de l'échelle (4), dont les valeurs supérieures à 0 % sont associées à la valeur de mesure, et
- au moyen de l'appareil d'inscription de mesure (48) on inscrit l'échelle (4) avec l'agencement déterminé des marques (6) sur le cadran (2),
caractérisé en ce que
l'organe de mesure (20), le dispositif indicateur (24), le cadran (2) sur lequel n'est pas encore inscrite l'échelle (4), et l'aiguille (8) sont tout d'abord montés à l'intérieur du boîtier (60) refermé sur la face avant au moyen de la vitre de contrôle,
en ce que l'on effectue ensuite la mesure des déflexions de l'aiguille (8) ainsi que la détermination des marques (6) à l'intérieur de l'échelle (4), et en ce que l'appareil d'inscription est un appareil d'inscription à laser (48), au moyen duquel s'effectue l'inscription à travers la vitre de contrôle.

2. Procédé selon la revendication 1, caractérisé en ce que l'inscription du cadran (2) avec la marque qui correspond à O % de la valeur de mesure est effectuée avant que le cadran (2) soit relié au dispositif indicateur (24).

3. Procédé selon l'une ou l'autre des revendication 1 et 2, caractérisé en ce qu'au moyen de l'appareil d'inscription à laser (48), on inscrit simultanément avec les marques (6) des indications de même couleur relatives aux chiffres de mesure et/ou à l'unité de mesure et/ou à la valeur de mesure et/ou à la qualité et/ou au fabricant.

4. Dispositif pour mettre en oeuvre le procédé selon l'une quelconque des revendications 1 à 3, comportant un dispositif de mesure (14) pour mesurer les déflexions de l'aiguille (8) pour des valeurs différentes de la valeur de mesure, un calculateur (46) auquel sont envoyées les paires de valeurs mesurées en tant que signal d'entrée pour leur association à une prescription pour l'agencement des marques (6) à l'intérieur de l'échelle (4), et un dispositif d'inscription (48) pour inscrire l'échelle sur le cadran respectif (2) en se basant sur cette prescription, le dispositif de mesure (14) présentant un dispositif de mesure optoélectronique (50) au moyen duquel les déflexions de l'aiguille (8) sont détectées sans contact, caractérisé en ce que l'appareil d'inscription est un appareil d'inscription à laser (48), et en ce que le dispositif de mesure optoélectronique (50) présente un appareil de prise de vues à semi-conducteur à couplage de charges (CCD) (52) qui délivre en fonctionnement, des informations d'image numériques.
